# EUROPÄISCHE PATENTANMELDUNG

(11) **EP 4 464 843 A1**
(43) Veröffentlichungstag der Anmeldung: **20.11.2024**
(21) Anmeldenummer: 23174249.5
(22) Anmeldetag: 19.05.2023
(51) Int. Cl.: E01C 19/00, G01S 17/42

(54) **SENSORSYSTEM FÜR EINE BAUMASCHINE**

(71) Anmelder: MOBA Mobile Automation AG, 65555 Limburg (DE)
(72) Erfinder: SCHNEE, Frank, 65555 Limburg (DE); HARMS, Volker, 65555 Limburg (DE)
(74) Vertreter: Pfitzner, Hannes

(57) **Zusammenfassung**

Ausführungsbeispiele der vorliegenden Erfindung schaffen ein Sensorsystem für eine Baumaschine (10), insbesondere eine Straßenverdichtungsmaschine oder Walze, die beispielsweise zwei Bandagen (Walzenkörper) (50) und (60) aufweisen kann. Die Baumaschine (10) steht auf der Oberfläche (20) einer aufgebrachten Schicht (30). Das Sensorsystem umfasst einen Laserscanner (92), eine Auswerteeinheit sowie eine Steuerung. Der Laserscanner (90) ist auf der Baumaschine (10), vorzugsweise seitlich, anordenbar und ausgebildet, um einen vorgegebenen Winkelbereich nach ein oder mehreren Objekten abzusuchen und um entsprechende Abstandswerte, die den Abstand zu den ein oder mehreren Objekten beschreiben, zusammen mit entsprechenden Intensitätswerten, die eine Intensität einer sich an den ein oder mehreren Objekten einstellenden Reflexion beschreiben, über Winkel des vorgegebenen Winkelbereichs zu ermitteln. Bei dem Objekt handelt es sich bevorzugt um eine Kante (32), wie z. B. eine Fräskante oder Kante einer weiteren Schicht, insbesondere einer darunterliegenden Schicht oder angrenzenden Schicht. Ein Beispiel wäre auch die Kante des Straßenbelags, den es zu verdichten gilt (und dessen Kante zu formen wäre). Die Auswerteeinheit ist ausgebildet, um ausgehend von einem bekannten Muster, umfassend die Abstandswerte und die Intensitätswerte über Abstandswinkel, ein Objekt als Referenz zu erkennen und eine Relation der Baumaschine oder einer Komponente der Baumaschine zu der Referenz zu bestimmen. Die Steuerung ist ausgebildet, die Baumaschine und/oder eine Komponente der Baumaschine in Abhängigkeit von der Relation zu der Referenz zu steuern. Alternativ kann die Steuerung auch eine Information bzgl. der Relation ausgeben, z.B. visualisieren (Soll-Ist-Darstellung).

## Beschreibung

Ausführungsbeispiele der vorliegenden Erfindung beziehen sich auf ein Sensorsystem für eine Baumaschine, insbesondere für eine Straßenverdichtungsmaschine oder Walze. Weitere Ausführungsbeispiele beziehen sich auf ein entsprechendes Verfahren und ein Computerprogramm.

Die Automatisierung hält weiterhin Einzug in den Straßenbau. Beim Straßenbau kommen unterschiedliche Maschinen, wie z. B. ein Straßenfertiger zum Aufbringen einer Schicht und zumindest eine Verdichtungsmaschine zum Verdichten der aufgebrachten Schicht, zum Einsatz. Hierbei werden viele Parameter von dem Personal gewählt und während des Betriebs angepasst, um die geforderte Qualität beim Einbauen und Verdichten des Straßenbelags realisieren zu können. Dazu zählen beispielsweise Vibrationsfrequenz oder Vibrationsamplitude bei der Walze und insbesondere auch Position der Walze.

Das gilt insbesondere, wenn mehrere Schichten nebeneinander eingebaut werden sollen. Insofern kommt dem Kantenbereich bzw. Eckbereich eine besondere Bedeutung zu. Beispielsweise kann der Kantenbereich einer eingebauten Schicht durch eine sogenannte Andruckwalze (Andruckrolle) entsprechend geformt werden.

Bei einer Verdichtung im Bereich einer Bordsteinkante kann es wichtig sein, dass ein Rinnstein nicht zerstört wird. Dies geschieht mitunter sehr leicht, wenn das Walzenpersonal den Bereich nicht ständig beobachtet.

Die Steuerung der Walze und der Parameter für die Walze sowie eine Bedienung der Zusatzkomponenten stellt eine erhebliche Steueraufgabe dar, die im Regelfall nicht durch eine einzige Person realisiert werden kann. In Folge der zunehmenden Automatisierung gibt es Bestrebungen für autonome und/oder semiautonome Baumaschinen. Deshalb besteht der Bedarf nach einem verbesserten Ansatz.

Aufgabe der vorliegenden Erfindung ist es, den Automatisierungsgrad von Straßenbaumaschinen, insbesondere von Verdichtungsmaschinen, zu erhöhen.

Die Aufgabe wird durch den Gegenstand der unabhängigen Patentansprüche gelöst.

Ausführungsbeispiele der vorliegenden Erfindung schaffen ein Sensorsystem für eine Baumaschine, insbesondere eine Straßenverdichtungsmaschine oder Walze. Das Sensorsystem umfasst einen Laserscanner, eine Auswerteeinheit sowie eine Steuerung. Der Laserscanner ist auf der Baumaschine anordenbar und ausgebildet, um einen vorgegebenen Winkelbereich nach ein oder mehreren Objekten abzusuchen und um entsprechende Abstandswerte, die den Abstand zu den ein oder mehreren Objekten beschreiben, zusammen mit entsprechenden Intensitätswerten, die eine Intensität einer sich an den ein oder mehreren Objekten einstellenden Reflexion beschreiben, über Winkel des vorgegebenen Winkelbereichs zu ermitteln. Bei dem Objekt handelt es sich bevorzugterweise, aber nicht notwendigerweise um eine Kante, wie z. B. eine Fräskante oder Kante einer weiteren Schicht, insbesondere einer darunterliegenden Schicht oder angrenzenden Schicht. Ein klassisches Beispiel wäre auch die Kante des Straßenbelags, den es zu verdichten gilt (und dessen Kante zu formen wäre). Die Auswerteeinheit ist ausgebildet, um ausgehend von einem bekannten Muster, umfassend die Abstandswerte und die Intensitätswerte über Abstandswinkel, ein Objekt als Referenz zu erkennen und eine Relation der Baumaschine oder einer Komponente der Baumaschine zu der Referenz zu bestimmen. Die Steuerung ist ausgebildet, die Baumaschine und/oder eine Komponente der Baumaschine in Abhängigkeit von der Relation zu der Referenz zu steuern. Alternativ kann die Steuerung auch eine Information bzgl. der Relation ausgeben, z.B. visualisieren (Soll-Ist-Darstellung, bspw. auf einem Bedienpult in der Fahrerkabine der Baumaschine).

Entsprechend Ausführungsbeispielen kann das Steuern ein Regeln der Querdynamik (Lenkung der Baumaschine) und/oder Längsdynamik (Fahrtrichtung und/oder Geschwindigkeit) der Baumaschine sein. Alternativ kann eine semiaktive Steuerung der Baumaschine erfolgen. Denkbar ist in diesem Zusammenhang beispielsweise auch ein (automatisches) Einschalten oder Ausschalten der Verdichtungsleistung (Vibration), welches meist beim Anfahren oder Anhalten (Start/Stopp oder Fahrtrichtungswechsel) erfolgt. Üblicherweise schaltet der Fahrer kurz vor dem Anhalten die Vibration aus und beim Anfahren wieder ein.

Ausführungsbeispielen der vorliegenden Erfindung liegt die Erkenntnis zugrunde, dass durch einen Laserscanner eine Kante, insbesondere eine Kante der aufgebrachten Asphaltschicht, erkannt werden kann, so dass abhängig von dieser Kante eine Steuerung der Baumaschine, wie z. B. eine Querdynamikssteuerung, erfolgen kann. Das ermöglicht vorteilhafterweise der Kante, autonom bzw. semiautonom zu folgen. Gerade im Randbereich der Asphaltschicht ist es besonders wichtig, dass die Verdichtungswalze präzise gesteuert wird, d. h. die Außenkanten der Walzenkörper (Bandagen) oder eine Andruckwalze (Andruckrolle) exakt entlang der Kante der aufgebrachten Schicht geführt wird. Denn, fährt die Verdichtungswalze beispielsweise zu weit über den Kanten- oder Randbereich der zu verdichtenden Schicht hinaus, so wird das Straßenbelagsmaterial aufgrund des Walzengewichts über den Kanten- oder Randbereich hinaus geschoben, was eine ungleichmäßige Verdichtung und somit eine verminderte Qualität der Straße zur Folge hat. Werden eine oder mehrere seitlich an der Verdichtungswalze angebrachte Andruckwalzen verwendet, so ist hierfür eine präzise Führung der Maschine entlang des Kanten- oder Randbereichs bzw. in Relation zu der Referenz erforderlich um eine gerade und scharfe Kante zu formen.

Eine autonome /semiautonome Steuerung kann dann beispielsweise vorliegen, wenn in die Lenkung der Baumaschine eingegriffen wird, d.h. also die Querdynamik gesteuert wird, um so beispielsweise die Relation zu der Kante (bzw. der Abstand zu der Kante) konstant zu halten bzw. innerhalb eines Korridors in Bezug auf die Referenz zu halten. Hierzu wird beispielsweise ein Soll/Ist eines Verlaufs, z. B. des Fahrtrichtungsverlaufs entlang der Kante, bestimmt und mit einem Ist-Verlauf abgeglichen. Bei einer autonomen Steuerung erfolgt z.B. die Regelung der Längsdynamik automatisch; bei der semiautonomen Steuerung durch den Maschinenführer. Entsprechend einer weiteren Variante wäre es möglich, dass die Nachregelaufgabe (Querdynamik) durch den Fahrer durchgeführt wird (Spurhalteassistent), wobei der Fahrer in Abhängigkeit von der erkannten Kante und der Abweichung von der Referenz einen entsprechenden Lenkhinweis erhält. Insofern ist die Steuerung ausgebildet ist, ausgehend von der Relation einen Ist-Verlauf zu bestimmen und diesen mit einem Soll-Verlauf abzugleichen; und/oder abhängig von der Relation einen Ist-Verlauf zu bestimmen und diesen zusammen mit einem Soll-Verlauf und/oder einer Abweichung vom Soll-Verlauf anzuzeigen.

Entsprechend Ausführungsbeispielen kann es sich bei der Kante um eine Kante des Straßenbelags, den es zu verdichten gilt (und dessen Kante zu formen wäre) oder eine Kante in einer darunterliegenden Schicht oder angrenzenden Schicht, wie z. B. eine Fräskante, handeln. Alternativ wäre es natürlich auch denkbar, dass eine Bordsteinkante, ein Materialübergang, eine Markierung oder ein Seil oder dergleichen als entsprechendes Objekt erkannt wird.

Entsprechend Ausführungsbeispielen umfassen die Abstandswerte einen Abstand zu der Referenz, einen lateralen Abstand zu der Referenz, einen Abstand zu der Referenz senkrecht oder im Wesentlichen senkrecht zu der Fahrtrichtung und/oder einen lateralen Abstand zu der Referenz senkrecht oder im Wesentlichen senkrecht zu der Fahrtrichtung. Entsprechend Ausführungsbeispielen ist die Auswerteeinheit ausgebildet, den zugehörigen Winkel gegenüber der Referenz zu bestimmen. Der Winkel ermöglicht vorteilhafterweise zusammen mit den Abstandswerten, die über den Laserscanner direkt ermittelbar sind, den lateralen Abstand zwischen Kante und Messgerät zu bestimmen. Wenn entsprechend Ausführungsbeispielen beispielsweise der laterale Abstand zwischen Messgerät und Bandage der Verdichtungsmaschine bekannt ist, kann dies als Offset berücksichtigt werden, um so der Kante zu folgen.

Bezüglich der Anordnung des Laserscanners sei angemerkt, dass dieser bevorzugterweise seitlich an der Baumaschine, insbesondere auf Höhe des vorderen oder hinteren Walzenkörpers der Verdichtungswalze oder auf Höhe oder vor oder nach der Andruckwalze, angeordnet ist. Entsprechend Ausführungsbeispielen kann die zu steuernde Komponente auch eine Andruckwalze (auch Andruckrolle oder Andrückrolle genannt) sein, d. h. die Verdichtungswalze respektive die Andruckwalze wird in Abhängigkeit von der Relation zu der Referenz gesteuert oder es wird eine Information bzgl. der Relation ausgeben. Hierbei wäre es bevorzugt, dass der Laserscanner vor oder hinter der Andruckwalze angeordnet ist, um so die Andruckwalze zu steuern. Alternativ wäre es auch denkbar, dass mehrere bzw. weitere Laserscanner neben dem bereits vorhandenen Laserscanner vorgesehen sind.

Entsprechend Ausführungsbeispielen kann die Steuerung ausgebildet sein, die Andruckwalze hoch- oder runterzufahren, einen Winkel der Andruckwalze anzupassen oder unterschiedliche Varianten der Andruckwalze, z. B. mit oder ohne Kantenschneider, auszuwählen. Beim dritten Ausführungsbeispiel kann die Andruckwalze vorteilhafterweise bei Aussparungen, wie z. B. bei Aussparungen für Gullideckel oder bei Gullideckeln hochgefahren werden. Hierzu ist die Auswerteeinheit ausgebildet, eine Aussparung, insbesondere einen Gullideckel und/oder eine Störstelle, zu erkennen. Die Steuerung ist dann ausgebildet, das Werkzeug, hier die Andruckwalze, aus- oder einzufahren bzw. anzuheben und abzusenken in Abhängigkeit von der erkannten Aussparung oder Störstelle.

Bezüglich der Erkennung des Musters sei angemerkt, dass entsprechend Ausführungsbeispielen das Sensorsystem beispielsweise während des laufenden Betriebs auf ein Muster trainiert werden kann. Hierzu wird beispielsweise der Laserscanner im Bereich eines Musters positioniert und per Benutzereingabe dem Laserscanner die Information übergeben, dass es sich um das zu erkennende Referenzmuster handelt.

Was den Laserscanner betrifft, so kann dieser bevorzugt als (2D- oder 3D-) LiDAR-Scanner (Light Detection and Ranging) ausgeführt sein. Der Laser- bzw. LiDAR-Scanner erzeugt je nach Ausführung ein zwei- oder dreidimensionales Abbild des gescannten Bereichs, beispielsweise ein Profil der Kante des Straßenbelags, wobei das Abbild aus einer Vielzahl von Daten (Punkten, Punktewolke) besteht, die von der Auswerteeinheit verarbeitet und ausgewertet werden können.

Entsprechend einem weiteren Ausführungsbeispiel ist es nicht notwendig, die absoluten Positionen und relativen Positionen zu bestimmen. Es reicht, dass eine aktuelle Position des erkannten Musters als Soll-Wert der Referenz bestimmt wird und nur eine Abweichung einer späteren Position von dem Soll-Wert bestimmt wird, um den Korrekturbedarf zu ermitteln.

Entsprechend Ausführungsbeispielen weist das Sensorsystem Mittel zur Positionsbestimmung, insbesondere einen oder mehrere GNSS-Sensoren, auf. Alternativ kann das Sensorsystem mit einem solchen Sensor bzw. Mitteln zur Positionsbestimmung gekoppelt sein. Die Steuerung ist ausgebildet, die Baumaschine und/oder die Komponente der Baumaschine in Abhängigkeit von einer ermittelten Position zu steuern. Entsprechend Ausführungsbeispielen kann also die Grobsteuerung im autonomen bzw. semiautonomen Betrieb unter Verwendung des Positionsbestimmungssensors erfolgen, während die Feinsteuerung dann mittels des Kantendetektors (Laserscanners) durchgeführt wird.

Weitere Ausführungsbeispiele beziehen sich auf eine Baumaschine, insbesondere eine Straßenverdichtungsmaschine oder Walze, mit einem entsprechenden Sensorsystem. Entsprechend Ausführungsbeispielen ist die Baumaschine autonom oder semiautonom steuerbar. Wie oben bereits erläutert, kann von einer Spurhalteassistenzfunktion ausgegangen werden, wenn dem Fahrer beispielsweise ein Hinweis bezüglich der Steuerungskorrektur gegeben wird. D.h., dass entsprechend Ausführungsbeispielen die Steuerung ausgebildet ist, über eine Visualisierung oder eine andere Mensch-Maschinen-Schnittstelle, wie z. B. eine akustische Mensch-Maschinen-Schnittstelle, eine Information über die Abweichung zwischen Soll- und Ist-Wert auszugeben.

Ein weiteres Ausführungsbeispiel bezieht sich auf ein entsprechendes Verfahren zum Betreiben einer Baumaschine. Das Verfahren umfasst die Schritte:
- Absuchen mittels eines Laserscanner, der auf der Baumaschine anordenbar ist, eines vorgegebenen Winkelbereichs nach ein oder mehreren Objekten, um entsprechende Abstandswerte, die den Abstand zu den einen oder mehreren Objekten beschreiben, zusammen mit entsprechenden Intensitätswerten, die eine Intensität einer sich an den einen oder mehreren Objekten einstellenden Reflexion beschreiben, über Winkel des vorgegebenen Winkelbereichs zu ermitteln;
- Bestimmen ausgehend von einem bekannten Muster, umfassend die Abstandswerte und die Intensitätswerte über Abtastwinkel, eines Objekts als Referenz zu erkennen, um eine Relation der Baumaschine oder einer Komponente der Baumaschine zu der Referenz zu bestimmen; und
- Steuern der Baumaschine und/oder der Komponente der Baumaschine in Abhängigkeit von der Relation zu der Referenz oder Ausgeben einer Information bzgl. der Relation zu der Referenz.

Entsprechend Ausführungsbeispielen kann das Verfahren computerimplementiert sein.

Ausführungsbeispiele der vorliegenden Erfindung werden nachfolgend anhand der beiliegenden Zeichnungen erläutert. Es zeigen:
- Fig. 1a/1c: eine Baumaschine, hier eine Straßenwalze, mit einem Sensorsystem gemäß Ausführungsbeispielen;
- Fig. 1b: eine schematische Darstellung eines Sensorsystem mit einer zu detektierenden Kante gemäß Ausführungsbeispielen;
- Fig. 2: eine Baumaschine, hier eine Straßenwalze, mit einem Sensorsystem zur Illustration des Steuerungsvorgangs gemäß Ausführungsbeispielen;
- Fig. 3: eine vergrößerte Darstellung einer mittels des Sensorsystems zu detektierenden Kante zur Illustration von Ausführungsbeispielen der vorliegenden Erfindung; und
- Fig. 4: schematische Darstellungen zur Illustration des Prinzips von Störstellenerkennung gemäß Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.

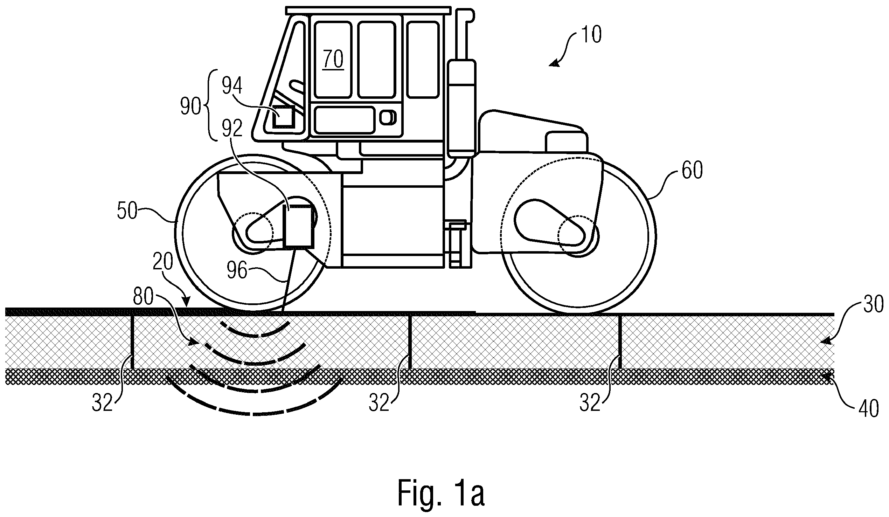

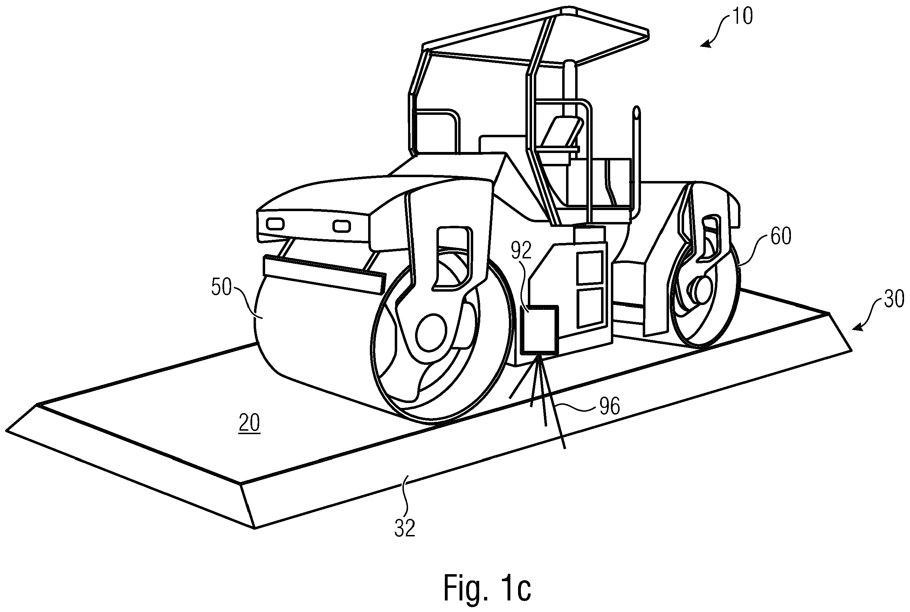

Fig. 1a zeigt eine selbstfahrende Baumaschine 10, hier eine Straßenwalze, die beispielsweise zwei Bandagen (Walzenkörper) 50 und 60 aufweisen kann. Die Bandagen 50 und 60 dienen zur Verdichtung der auf den Untergrund 40 aufgebrachten Schicht 30. Hierzu steht die Baumaschine 10 mit ihren Bandagen auf der Oberfläche 20 der aufgebrachten Schicht 30 und verdichtet die Schicht 30 durch Eigengewicht und/oder Vibration 80. Die Vibration wird über die Bandage 50 eingebracht. Die Bandagen 50 und 60 weisen eine große Aufstandsfläche auf, wobei gerade im Randbereich der Straße die Schwierigkeit besteht, der hier exemplarisch mit dem Bezugszeichen 32 versehen ist, die Bandage 50 bzw. die Außenkante der Bandage 50 oder ein Werkzeug (nicht dargestellt) derart zu positionieren bzw. allgemein entlang des Randbereichs 32 zu steuern. Die Steuerung erledigt typischerweise der Fahrer im Führerstand 70 rein manuell. Dabei muss der Fahrer darauf achten, dass die Straßenwalze beispielsweise nicht zu weit über den Kanten- oder Randbereich 32 der zu verdichtenden Schicht 30 hinaus fährt und durch das Gewicht der Straßenwalze Straßenbelagsmaterial über den Kanten- oder Randbereich 32 hinaus geschoben wird. Eine präzise Steuerung (Lenkung) der Maschine, gerade im Randbereich 32 der Asphaltschicht 30, ist somit besonders wichtig. Fig. 1c zeigt die Straßenwalze gemäß Fig. 1a nochmal in perspektivischer Ansicht.

Entsprechend Ausführungsbeispielen der vorliegenden Erfindung wird die Steueraufgabe durch ein Sensorsystem 90 verbessert. Das Sensorsystem 90 umfasst beispielsweise einen Laserscanner 92 sowie ein Steuergerät 94. Das Steuergerät 94 umfasst entsprechend Ausführungsbeispielen die Auswertung des Laserscanners 92 und/oder die Steuerung. An dieser Stelle sei gleich darauf hingewiesen, dass natürlich statt dem einzelnen Steuergerät 94 auch mehrere einzelne Module vorgesehen sind, was sich insbesondere dann anbietet, wenn eine sowieso vorhandene Steuerung der Baumaschine 10 (nicht dargestellt) genutzt werden soll.

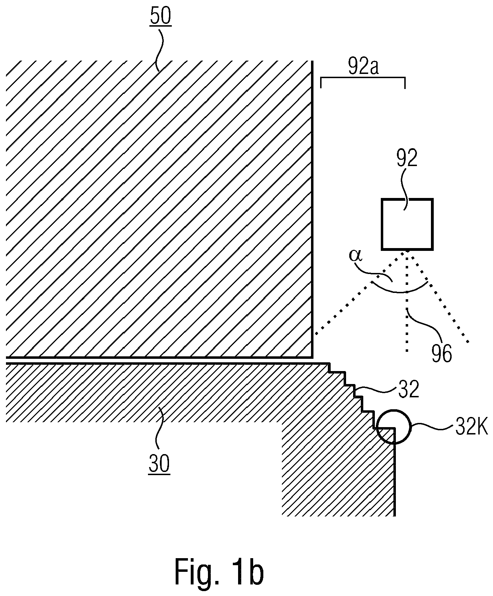

Der Laserscanner 92 ist beispielsweise im seitlichen Bereich der Baumaschine 10 angeordnet und auf die Kante 32 gerichtet, wie anhand von Fig. 1b dargestellt. Fig. 1b stellt eine Schnittdarstellung durch den Straßenbelag 30 dar, der durch eine Bandage 50 verdichtet wird. Der Straßenbelag 30 weist eine Kante 32 auf, die mittels des beispielsweise oberhalb der Kante 32 angebrachten Laserscanners 92 erfasst wird.

Der Laserscanner 92 ist ausgebildet, ein Muster, insbesondere ein Reflexionsmuster, eines ausgesendeten Laserstrahls 96 zu erkennen. Das Muster umfasst beispielsweise über den zu erfassenden Winkelbereich Intensitätswerte und Abstände zu den einzelnen Intensitätswerten. Über den Winkel ergibt sich so ein Muster, das beispielsweise charakteristisch für eine Seitenkante, Bordsteinkante, Fräskante oder Kante einer darunterliegenden Asphaltschicht ist. Bei dem Laserscanner 92 kann es sich bspw. um einen (2D- oder 3D-) LiDAR-Scanner handeln. Durch die Erkennung, die die Auswertemittel im Steuergerät 94 übernehmen, kann so das Muster bzw. im Muster eine Referenz erkannt werden. Die Auswertung ist ferner ausgebildet, einen Abstand zu der Referenz, insbesondere einen lateralen Abstand von der Baumaschine zur Referenz, zu bestimmen. Ausgehend von der Referenz bzw. dem Abstand zu der Referenz kann die Maschinensteuerung im Steuermodul 94 dann eine Steuerung übernehmen. Hierbei kann dann eine semiautonome oder auch eine autonome Steuerung umfasst sein. Eine alternative Implementierung (Spurhalteassistent) umfasst beispielsweise eine Mensch-Maschinen-Schnittstelle im Steuerstand 70, um an den Maschinenführer eine Information bezüglich einer Abweichung der Ist-Position oder Soll-Position zu bestimmen. Beispielsweise kann die Soll-Position durch einen konstanten Abstand zu der Referenz bestimmt sein.

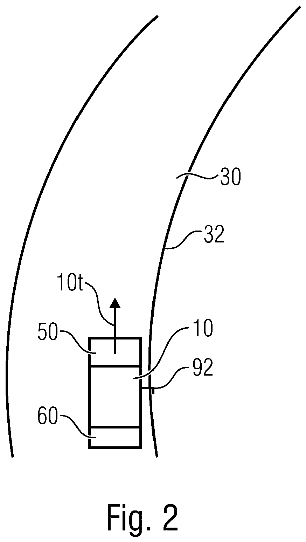

Bezug nehmend auf Fig. 2 wird eine exemplarische Steuerung bzw. ein Steuerungsansatz erläutert.

Fig. 2 zeigt in der Vogelperspektive eine Straßenbaumaschine 10 mit den zwei Walzenkörper (Bandagen) 50 und 60, die die Verdichtungsaufgabe hat, den aufgebrachten Straßenbelag 30 zu verdichten bzw. allgemein zu bearbeiten. Der Straßenbelag 30 weist eine Referenz, hier eine Kante 32, z.B. in der aufgebrachten Schicht 30 (vgl. Fig. 1b) auf. Beispielsweise kann davon ausgegangen werden, dass die Straßenbaumaschine 10 entlang der Kante 32 (die hier gekrümmt ist) geführt werden soll. Gemäß Ausführungsbeispielen weist die Straßenbaumaschine 10 den Laserscanner 92 auf, der hier wiederum seitlich positioniert ist, nämlich so, dass selbiger die Kante 32 erfassen kann. An dieser Stelle sei darauf hingewiesen, dass - je nachdem welche Kante bzw. welche Referenz erfasst werden soll - die Positionierung auch anders sein kann. Insofern ist sowohl die Positionierung des Sensors 92 im Seitenbereich der Baumaschine als auch das Verwenden der Kante 32 als Referenz als exemplarisch zu betrachten.

Hierzu erfasst der Laserscanner 92, wie in Fig. 1b dargestellt, die Kante 32 der aufgebrachten Schicht 30, wie folgt. Der Laserscanner 92 tastet optisch mittels eines Laserstrahls 96 bzw. mehrerer Laserstrahlen 96 innerhalb eines Winkelbereichs α die Oberfläche des Untergrunds ab, um die / alle Abstände zum Untergrund zu ermitteln. Die Abstände trägt diese zusammen mit den entsprechenden Intensitätswerten des reflektierten Lichts über den Winkel α auf. Anhand dieses Musters kann also eine Kante 32 oder ein bestimmter Bereich der Kante, wie hier z. B. der Bereich 32k, als Kante/Referenz erkannt werden. Da der Abstand zwischen Baumaschine und Laserscanner 92 bekannt ist (vgl. Bezugszeichen 92a), kann so der Abstand zwischen der Kante bzw. dem Bereich der Kante 32k und der Baumaschine bestimmt werden. Hierbei ist beispielsweise der laterale Abstand, d. h. also quer zur Fahrtrichtung, gemeint.

Ausgehend von einem so bestimmten lateralen Abstand kann die Steueraufgabe der Baumaschine dadurch unterstützt werden, dass entweder Hinweise oder auch Steuerbefehle an der Baumaschine 10 ausgegeben werden, die es ermöglichen, den Abstand zwischen Baumaschine 10 und der Kante 32 (vgl. Fig. 2) konstant zu halten. Hierdurch ist es möglich, die Baumaschine 10 entlang ihrer Fahrtrichtung 10f entlang der Kante 32 zu steuern und das beispielsweise autonom oder semiautonom. Jegliche Automatisierungsgrade sind möglich, wie z. B. eine alleinige Regelung der Lenkung und/oder eine alleinige Regelung von Lenkung (Querdynamik) und/oder Fahrtrichtungsbestimmung inklusive oder exklusive der Geschwindigkeit (Längsdynamik). Entsprechend einer vereinfachten Version kann auch nur ein Hinweis an den Fahrer gegeben werden, ob die aktuelle Ist-Position bzw. der aktuelle Ist-Abstand zu der Referenz bzw. der Kante 32 als Referenz dem Soll-Abstand entspricht oder ob eine Abweichung (entweder positiv oder negativ) vorliegt.

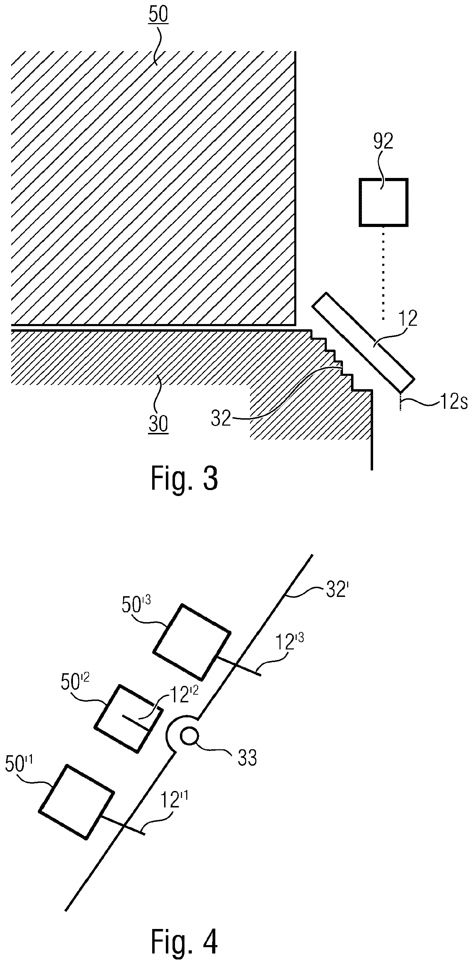

Neben der Steuerung der Baumaschine 10 oder alternativ zu der Steuerung der Baumaschine 10 wäre es auch denkbar, dass Komponenten der Baumaschine 10, wie z. B. eine Andruckwalze 12 der Baumaschine, gesteuert werden. Dieses Ausführungsbeispiel wird Bezug nehmend auf Fig. 3 erläutert.

Fig. 3 zeigt ausgehend von Fig. 1b die Walzenbandage 50, die den Straßenbelag 30 mit ihrer Kante 32 verdichtet. Im Bereich der Kante 32 ist ein sogenannte Andruckwalze 12 mit optionalem Kantenschneider 12s vorgesehen. Dieser verdichtet von der Seite die Kante 32 und begrenzt den Materialfluss der verdichteten Schicht 30 im Kantenbereich. Wie hier dargestellt ist die Andruckwalze gewinkelt angeordnet, um die Kante zu formen. Entsprechend Ausführungsbeispielen kann die Andruckwalze eingefahren und ausgefahren werden, der Winkel angepasst werden, die Höhe angepasst werden und/oder die Option mit oder ohne Kantenschneider aktiviert werden. Ausgehend von dieser Andruckwalze 12 wird nun die Funktionsweise des Sensorsystems umfassend den Laserscanner 92 erläutert. Der Scanner 92 bestimmt die Position der Kante und steuert ausgehend von der erkannten Position oder der erkannten Kante 32 der Andruckwalze. Beispielsweise kann der Winkel in Abhängigkeit davon angepasst werden oder auch eine Positionierung erfolgen.

Entsprechend Ausführungsbeispielen ist der Laserscanner im Bereich der Andruckrolle/Kanteschneider/Kantenschneidegeräts bzw. allgemein des Werkzeugs angebracht.

Eine exemplarische Vorgehensweise zum Ein- und Ausfahren der Andruckwalze in Abhängigkeit von der erkannten Kante oder Störstelle wird nun nachfolgend Bezug nehmend auf Fig. 4 erläutert.

Fig. 4 zeigt die Kante 32' zusammen mit drei Positionen einer Walze, die mit dem Bezugszeichen 50'1, 50'2 und 50`3 versehen sind. Es ist jeweils auch die zugehörige Andruckwalze 12'1, 12`2 und 12`3 dargestellt. Wie zu erkennen ist, folgt die Kante 32' dem Straßenverlauf, wobei eine Störstelle 33, hier z. B. ein Gullideckel, vorgesehen ist. In dem Bereich der Störstelle 33 wird keine Kantenformung durchgeführt. Deshalb wird an einer Position 50`2 im Bereich des Gullideckels 33 die Andruckwalze 12`2 eingefahren (vorherige Position 12'1, ausgefahren bei der Position 50'1), um dann nachher an der Position 50`3 wieder ausgefahren zu werden (vgl. 12`3).

Entsprechend Ausführungsbeispielen können auch andere Werkzeuge in Abhängigkeit von der Kante gesteuert bzw. ein- und ausgefahren werden. Auch wenn in obigen Ausführungsbeispielen von einem Gullideckel 33 als Hindernis ausgegangen wurde, sei an dieser Stelle angemerkt, dass auch andere Hindernisse selbstverständlich auch mitberücksichtigt werden können. Um den Anfang und das Ende des Hindernisses gut zu erkennen, ist entsprechend bevorzugten Ausführungsbeispielen der Laserscanner vor der Komponente angeordnet. Entsprechend weiteren Ausführungsbeispielen kann der Laserscanner auch vor oder hinter der Komponente angeordnet sein.

Auch kann entsprechend Ausführungsbeispielen die Wahl des Werkzeugs, z. B. Andruckrolle mit und ohne Kantenschneidegerät oder Andruckrolle oder Kantenschneidegerät, in Abhängigkeit von der Kantenreferenz oder Kantenausprägung gewählt werden. Dieses Wählen kann automatisch erfolgen.

Wenn entsprechend Ausführungsbeispielen die Straßenwalze nicht-autonom fahrend ist bzw. der Einfluss auf die Lenkbewegung der Straßenwalze begrenzt ist, so kann entsprechend Ausführungsbeispielen die Position der Andruckrolle in Abhängigkeit von der bestimmten Referenz variiert werden (semiautonome Steuerung). Diese Variation erfolgt entsprechend Ausführungsbeispielen vollautomatisch durch die Steuerung.

Bei obigen Ausführungsbeispielen wurde insbesondere davon ausgegangen, dass die Steuerung autonom (semiautonom / vollautonom) erfolgt. Unter einer vollautonomen Steuerung wird entsprechend Ausführungsbeispielen eine Steuerung verstanden, bei der sowohl die Längsdynamik (Fahrtrichtung und/oder Fahrtgeschwindigkeit) als auch die Querdynamik (Spurhaltung) abhängig von den Daten des Laserscanners gesteuert werden. Gerade bei autonom fahrenden Walzen ermöglicht das Sensorsystem, abhängig von der erkannten Kante oder allgemein Referenz ein Signal an die Maschinensteuerung gegeben wird, welches Informationen über die Position der Andruckwalze/des Kantenschneiders/des Kantenschneidegeräts in Bezug auf die Fahrbahn erhält, so dass die Steuerung der Lenkung der Maschine selbstständig korrigiert werden kann.

Gerade bei der vollautonomen Steuerung können entsprechend weiteren Ausführungsbeispielen noch zusätzliche Sensorsignale, wie z. B. die von einem oder mehreren GNSS-Sensoren, verwendet werden.

Entsprechend weiteren Ausführungsbeispielen wäre auch eine semiautonome Steuerung denkbar, bei welcher nur die Querdynamik autonom geregelt wird, während die Längsdynamik durch den Fahrzeugbediener geregelt wird. Entsprechend weiteren Ausführungsbeispielen kann auch nur eine Spurhalteassistenzfunktion durch die Sensorik unterstützt werden. Hierbei werden dem Fahrzeugbediener visuelle oder akustische (Lenk-)Hinweise gegeben, ob oder wie die Spur der Walze korrigiert werden soll. Diese Variante bietet sich als Retrofit für nicht-autonom fahrende Walzen an.

Entsprechend Ausführungsbeispielen ist der Abstand des Laserscanners 92 von der Baumaschine oder einer Komponente der Baumaschine bekannt. Beispielsweise kann der Laserscanner 92 fest mit einer Komponente der Baumaschine, wie z. B. der Andruckwalze oder der Mechanik für die Andruckwalze, gekoppelt sein. Der Laserscanner ist nun ausgebildet, in Bezug auf die Position des Laserscanners eine Relation eines erkannten Musters zu erkennen. Beispielsweise kann ein Muster unter einem bestimmten Winkel in einem bestimmten Abstand erkannt werden. Unter Kenntnis der Positionierung des Laserscanners/Ausrichtung des Laserscanners kann so ein lateraler Versatz des Kantenmusters bzw. der Kantenreferenz in Bezug auf den Laserscanner bestimmt werden. Die exakte Ausrichtung des Laserscanners muss gar nicht bekannt sein. Es reicht, dass der Laserscanner auf das zu erkennende Muster beispielsweise senkrecht nach unten bestimmbar ist. Ausgehend von einem bekannten Versatz des Laserscanners in Bezug auf die Baumaschine kann so nun der absolute Versatz der Referenz gegenüber der Baumaschine erkannt werden. Somit kann also entsprechend Ausführungsbeispielen eine Information bezüglich dem absoluten Versatz bestimmt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sensorsystem (90) für eine Baumaschine (10), insbesondere eine Straßenverdichtungsmaschine oder Walze, mit folgenden Merkmalen:
einem Laserscanner (92), der auf der Baumaschine (10) anordenbar ist und ausgebildet ist, um einen vorgegebenen Winkelbereich (α) nach ein oder mehreren Objekten (32) abzusuchen und um entsprechende Abstandswerte, die den Abstand zu den ein oder mehreren Objekten (32) beschreiben, zusammen mit entsprechenden Intensitätswerten, die eine Intensität einer sich an den ein oder mehreren Objekten (32) einstellenden Reflexion beschreiben, über Winkel des vorgegebenen Winkelbereichs (α) zu ermitteln;
eine Auswerteeinheit (94), die ausgebildet ist, um ausgehend von einem bekannten Muster, umfassend die Abstandswerte und die Intensitätswerte über Abtastwinkel, ein Objekt (32) als Referenz zu erkennen und eine Relation der Baumaschine (10) oder einer Komponente (12) der Baumaschine (10) zu der Referenz zu bestimmen; und
eine Steuerung (94), die ausgebildet ist, die Baumaschine (10) und/oder der Komponente (12) der Baumaschine (10) in Abhängigkeit von der Relation zu der Referenz zu steuern oder eine Information bezüglich der Relation auszugeben.

2. Sensorsystem (90) gemäß Anspruch 1, wobei die Steuerung (94) ausgebildet ist, eine Querdynamik, insbesondere Lenkung der Baumaschine (10) und/oder eine Längsdynamik, insbesondere Fahrtrichtung der Baumaschine (10) und/oder die Geschwindigkeit der Baumaschine (10), zu steuern.

3. Sensorsystem (90) gemäß einem der vorherigen Ansprüche, wobei die Steuerung (94) derart erfolgt, dass die Relation zu der Referenz konstant bleibt und/oder innerhalb eines Korridors in Bezug auf die Referenz gehalten wird.

4. Sensorsystem (90) gemäß einem der vorherigen Ansprüche, wobei die Objekte (32) ein oder mehrere Objekte (32) umfassen, die aus der Gruppe umfassend die folgenden Elemente stammen:
- Kante;
- Fräskante;
- Kante einer weiteren Schicht, insbesondere einer darunterliegenden Schicht oder angrenzenden Schicht;
- Bordsteinkante;
- Materialübergang;
- Markierung;
- Seil.

5. Sensorsystem (90) gemäß einem der vorherigen Ansprüche, wobei die Abstandswerte einen Abstand zu der Referenz, einen lateralen Abstand zu der Referenz, einen Abstand zu der Referenz senkrecht oder im Wesentlichen senkrecht zu der Fahrtrichtung und/oder einen lateralen Abstand zu der Referenz senkrecht oder im Wesentlichen senkrecht zu der Fahrtrichtung umfassen; und/oder
wobei die Auswerteeinheit (94) ausgebildet ist, den zugehörigen Winkel gegenüber der Referenz zu ermitteln.

6. Sensorsystem (90) gemäß einem der vorherigen Ansprüche, wobei der Laserscanner (92) an einer Seite der Baumaschine (10), insbesondere auf Höhe des vorderen oder hinteren Walzenkörpers (50, 60) der Verdichtungswalze oder auf Höhe oder vor oder nach einer Andruckwalze (12), angeordnet ist.

7. Sensorsystem (90) gemäß einem der vorherigen Ansprüche, wobei die zu steuernde Komponente (12) eine Andruckwalze (12) umfasst.

8. Sensorsystem (90) gemäß einem der vorherigen Ansprüche, wobei der Laserscanner (92) vor oder hinter der Andruckrolle angeordnet ist.

9. Sensorsystem (90) gemäß einem der vorherigen Ansprüche, wobei das Sensorsystem einen weiteren Laserscanner (92) aufweist.

10. Sensorsystem (90) gemäß einem der vorherigen Ansprüche, wobei die Steuerung (94) ausgebildet ist, die Andruckrolle hoch- oder runterzufahren, und/oder einen Winkel anzupassen und/oder eine Variante der Andruckrolle auszuwählen.

11. Sensorsystem (90) gemäß einem der vorherigen Ansprüche, wobei die Auswerteeinheit (94) ausgebildet ist, eine Aussparung, insbesondere einen Gullideckel (33), und/oder eine Störstelle zu erkennen; und/oder
wobei die Steuerung (94) ausgebildet ist, ein Werkzeug aus- oder einzufahren oder anzuheben oder abzusenken in Abhängigkeit von einer erkannten Aussparung und/oder Störstelle.

12. Sensorsystem (90) gemäß einem der vorherigen Ansprüche, wobei die Auswerteeinheit (94) ausgebildet ist, auf ein mit dem Laserscanner (92) erfasstes Muster trainiert zu werden, und insbesondere auf ein mit dem Laserscanner (92) im laufenden Betrieb erfasstes Muster trainiert zu werden.

13. Sensorsystem (90) gemäß einem der vorherigen Ansprüche, wobei das Sensorsystem (90) mit Mitteln zur Positionsbestimmung, insbesondere einem oder mehreren GNSS-Sensoren, gekoppelt ist und/oder Mittel zur Positionsbestimmung umfasst; und/oder
wobei die Steuerung (94) ausgebildet ist, die Baumaschine (10) und/oder die Komponente (12) der Baumaschine (10) in Abhängigkeit von einer ermittelten Position zu steuern.

14. Sensorsystem (90) gemäß einem der vorherigen Ansprüche, wobei das ausgeben der Information bezüglich der Relation ein Ausgeben oder Darstellen oder Visualisieren einer Abweichung zwischen Soll- und Ist-Werte der Relation umfasst.

15. Baumaschine (10), insbesondere Straßenverdichtungsmaschine oder Walze, mit einem Sensorsystem (90) gemäß einem der vorherigen Ansprüche.

16. Baumaschine (10) gemäß Anspruch 15, wobei die Baumaschine (10) durch die Steuerung (94) autonom oder semiautonom steuerbar ist.

17. Verfahren zum Betreiben einer Baumaschine (10), insbesondere eine Straßenverdichtungsmaschine oder Walze, unter Verwendung eines Sensorsystems (90) gemäß einem der Ansprüche 1 bis 14 mit folgenden Schritten:
Absuchen mittels eines Laserscanners (92), der auf der Baumaschine (10) anordenbar ist, eines vorgegebenen Winkelbereichs (α) nach ein oder mehreren Objekten (32), um entsprechende Abstandswerte, die den Abstand zu den ein oder mehreren Objekten (32) beschreiben, zusammen mit entsprechenden Intensitätswerten, die eine Intensität einer sich an den ein oder mehreren Objekten (32) einstellenden Reflexion beschreiben, über Winkel des vorgegebenen Winkelbereichs (α) zu ermitteln;
Bestimmen ausgehend von einem bekannten Muster, umfassend die Abstandswerte und die Intensitätswerte über Abtastwinkel, eines Objekts (32) als Referenz zu erkennen, um eine Relation der Baumaschine (10) oder einer Komponente (12) der Baumaschine (10) zu der Referenz zu bestimmen; und
Steuern der Baumaschine (10) und/oder der Komponente (12) der Baumaschine (10) in Abhängigkeit von der Relation zu der Referenz oder Ausgeben einer Information bezüglich der Relation zu der Referenz.

18. Computerprogramm zur Durchführung des Verfahrens nach Anspruch 17.
